# EUROPEAN PATENT SPECIFICATION

(11) **EP 1 044 089 B1**
(45) Date of publication and mention of the grant of the patent: **18.09.2002**
(21) Application number: 98908298.7
(22) Date of filing: 18.03.1998
(51) Int. Cl.: B29C 33/02, B29C 45/73

(54) **MOMENTARY SURFACE HEATED MOULD TOOL WITH GAS FLAME**
FORMWERKZEUG MIT DURCH EINE GASFLAMME DIREKT ERWÄRMTES OBERFLÄCHE
OUTIL DE MOULAGE A SURFACE MOMENTANEMENT CHAUFFEE PAR UNE FLAMME AU GAZ

(30) Priority: 16.05.1997 DE 29708721 U
(43) Date of publication of application: 18.10.2000
(73) Proprietor: Yim, Sook-Jia, Seoul 137-062 (KR)
(72) Inventor: Yim, Sook-Jia, Seoul 137-062 (KR)
(74) Representative: Copp, David Christopher
(86) International application number: KR9800049
(87) International publication number: WO98051460

(56) References cited:
- DE-B- 1 048 405
- DE-B- 2 241 657
- PATENT ABSTRACTS OF JAPAN; & JP,A,06 170 934 (UBE IND., LTD.) 21 June 1994.

## Description

### Technical Field

The present invention relates to a mold tool in which mold surfaces are heated momentarily with the flames of gas fuel and a molding method using such a mold tool.

### Description of the Prior Art

Molds and molding methods are generally concerned with a plastic technology. The plastic technology comprises three fields of technologies; a resin technology, a processing machine technology and a mold tool manufacturing technology. The quality of a final plastic product depends on qualities of the three technologies. Among them, the tool technology more relies on trial-and-error experiences rather than theoretical standards. The most difficult aspect of this technology is the method of how to heat up the mold as high as desired and cool it down as quickly as possible.

JP 06-170934 describes a mold tool comprising a pair of molds and a gas burner, in which the gas burner moves to a central position between the molds. A plurality of torches are provided on the gas burner for generating flames.

However, prior art mold tools do not heat the mold as quickly and efficiently as possible.

It is the object of this invention to provide a mold tool which heats surfaces of the mold more quickly and efficiently than conventional mold tools and to provide a molding method using such a mold tool.

### Disclosure of the Invention

Accordingly, the present invention has been made keeping in mind the above problems occurring in the prior art.

The above object is achieved according to the invention by a mold tool in which mold surfaces are heated momentarily with the flames of gas fuel, comprising: a set of mold bodies, having a gas fuel supply channel in a body for supplying gas fuel into a space defined between the set of mold bodies, an oxygen supply channel in the other body for supplying oxygen into the space defined between the set of mold bodies; and ignition means for igniting the supplied gas fuel and oxygen in the space defined between the set of mold bodies; and a gas fuel supply conduit communicated with the gas fuel supply channel and closable when supply ends, and an oxygen supply conduit communicated with the oxygen supply channel and closable when oxygen supply ends; whereby the gas fuel supply channel is provided with a plurality of supply exits having sizes respectively smaller than a size which allows molding material to flow between the gas fuel supply channel and internal surfaces of the set of mold bodies; and in that the oxygen fuel supply channel is provided with a plurality of supply exits having sizes respectively smaller than a size which allows molding material to flow between the oxygen supply channel and internal surfaces of the set of mold bodies.

According to this invention the above object is further achieved by a molding method using a mold tool as described above, comprising the steps of: supplying gas fuel and oxygen into a space defined between the set of mold bodies; igniting the supplied gas fuel and oxygen; heating internal surfaces of the set of mold bodies momentarily with the flames of gas fuel to a desired temperature; and feeding molding material into an internal cavity of the mold tool and forming the material in the mold tool.

### Brief Description of the Drawings

The above a features and other advantages of the will be more clearly understood from the following detailed description taken in conjunction with the accompanying drawings, in which:

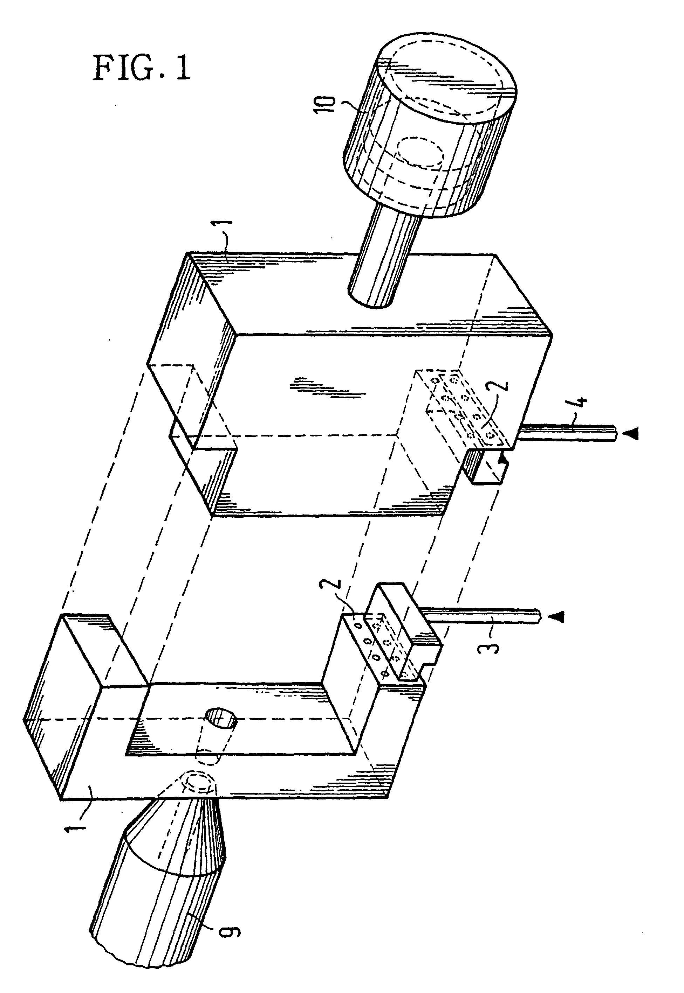

Fig. 1 is a view of a typical injection machine and a mold tool and shows the gas fuel supplying devices on the bottom of a mold tool;
Fig. 2 is a general design of a mold tool with gas fuel supply channels 3 and, oxygen or air-supply channels 4, needle holes 5, gas supply and cooling water channels 7 and the space between two parts of the mold tool 6 for a gas flame and the flame protectors 8;
Fig. 3 is a view of a common needle hole gas fuel supplying device through which the gas passes, but the molten resin does not pass. It consists of a needle hole unit 11 and a fixing unit 12;
Fig. 4 is a view of a gas flame protector keeping gas and the gas flame inside the space defined between the two mold parts. Fig. 4(a) is a front view of the core part of the mold tool and Fig. 4(b) is a view of the cavity part of the mold tool;
Fig. 5 is a view of a line connection of the gas fuel supply channel and chilled water channel when two channels use the same path;

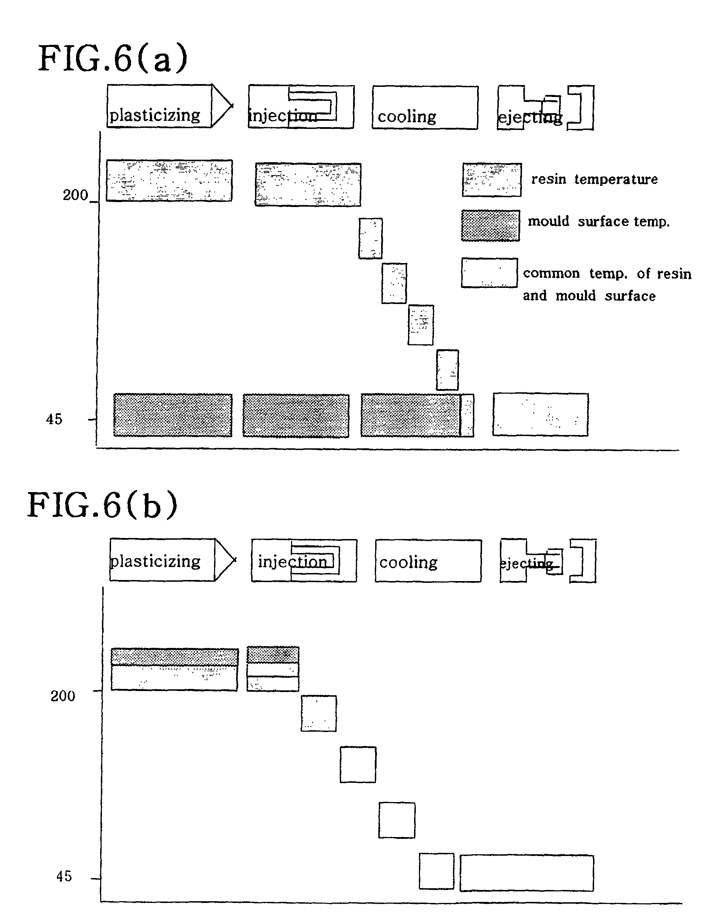

Fig. 6 is a graph of comparison of the temperatures of molten resins and mold surfaces between the normal injection molding and this injection molding process. Fig. 6(a) shows the temperature gap between the mold surface and molten resin for ordinary injection molding. Fig. 6(b) shows the temperature gap for the present mold tool with a gas flame and its process;
Fig. 7 is a graph of heating time comparing a closed flame and an opend flame. Heating time relates to the mold wall thickness. The fuel is acetylene and the tool material is carbon steel;

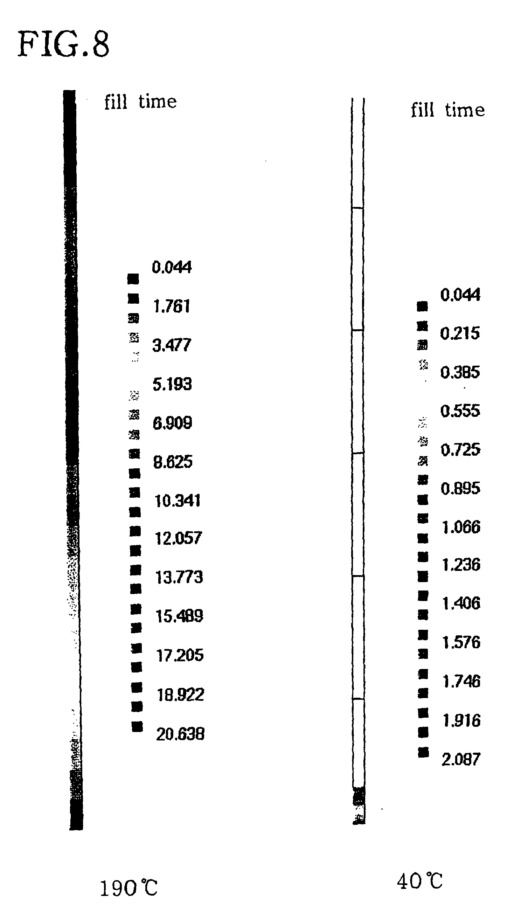

Fig. 8 is a computer simulated graph comparing the resin flow lengths between 40°C and 190°C. The flow length of 190°C is 30 times greater than that of 30°C; and

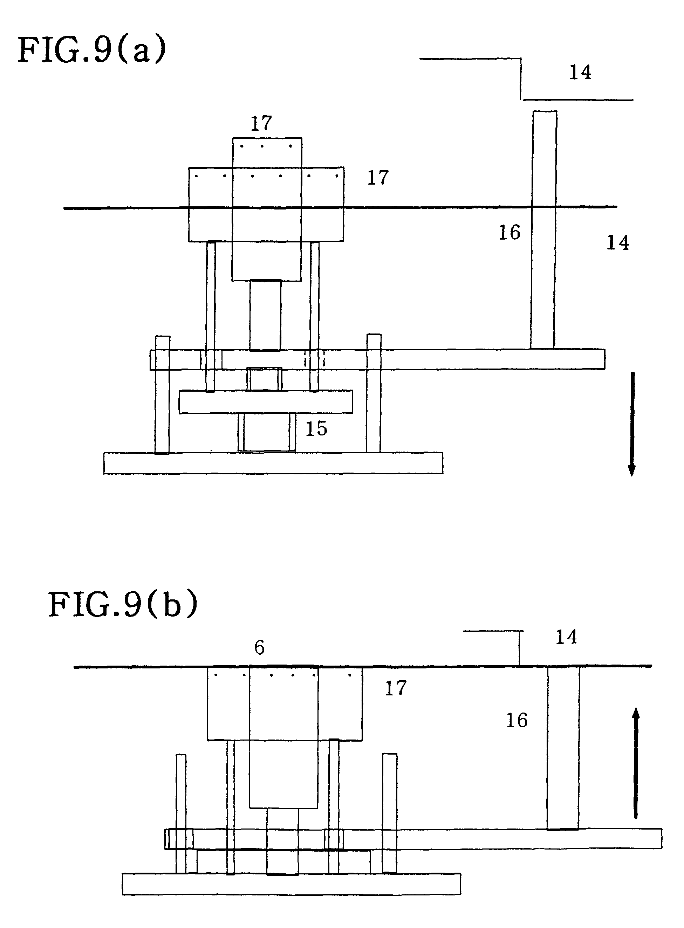

Fig. 9 is a general design of multiple gas suppling units with moving support. Fig. 9(a) shows the multi-gas supply unit out of the mold surface when the mold tool is open. Fig. 9(b) shows the multi-gas supply unit buried inside of the mold when the mold tool is completely closed.

### Best Mode for Carrying Out the Invention

A mold tool heated momentarily with the flames of gas fuel and a molding method using such a mold tool mold tool are disclosed. These allow the mold surface temperature to be as high as necessary and not less than the molten resin temperature so that the molten resin fills into the cavity free from flow resistance. Additionally, it makes the surface of molded products completely glossy without any gate mark, weld line, flow mark and roughness which are often apparent on ordinary plastic molded products and are caused by stresses and temperature unconformity of the molded products. These defects are produced when they push the warm molten resin into the mold cavity while the mold surface is of a cooler temperature. Advantageously, the time to heat up the mold surface to 300°C does not exceed 10 seconds and it makes the entire mold surface to be heated constantly and consistently by heating the mold surface only with the gas flame no matter how high the temperature is and no matter how big or complicated the mold tool is.

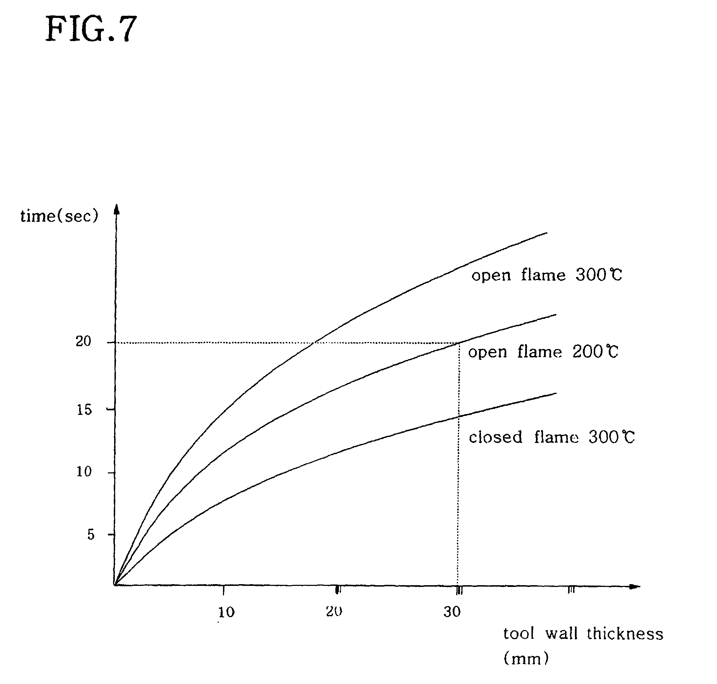

Heating the mold surface to a temperature not lower than the molten resin temperature may be not only eliminated completely not only all kinds of some surface defects of plastic products, but also enlarged the resin flow length in the mold tool enormously as shown in Fig 7. It enables a reduction by half the component thickness by using strong and tough materials with bad fluidity and eliminates the subsidiary ribs and bosses regardless of warpage and short shots. Accordingly, the unit injection pressure may be reduced enormously and save energy and money on machine investment. Eventually, it cuts in half the plastic component cost.

The invented mold tool heated momentarily with the flames of gas fuel and a molding method using such a mold tool may be adopted in all injection molding processes, all blow molding processes and all thermal forming processes. Especially for the fine texture injection molding process for compact discs, it reflects a fine texture precisely on the surface of such compact discs and provides for excellent quality. A high quality produced surface of an injection molded plastic product eliminates second treatments, such as a spray painting to coyer the flow marks and weld lines, and it solves the problem of an extraordinarily rough surface of plastic products made by gas assisted injection mold processes. In all inaction molding processes, it makes completely perfect surface products that eliminate expensive second treatments and eventually reduces production cost.

Until now, no scientist has been able to avoid the molecular structural stresses in plastic injection molded components. When the molten resin ranging in temperature from 180°C to 300°C gets into a mold cavity of a temperature of 40°C, the first-injected front portion of the fluid stays near to the gate, the following inserted resin passes through the solid skin of the first-injected resin and molecular structural stresses are generated. This causes the deformation and curve of plastic injection molded components after the complete solidification of products by itself. But, the mold tool heated momentarily with the flames of gas fuel and a molding method using such a mold tool may get rid of all unpredictable parameters and molecular structural stresses in injection molded components. It enables the theoretical analysis of ideal conditions of plastic injection molding processes and establishes the fundamental theories of plastic injection molding processes.

Heating the mold surface above the temperature of a molten resin and injecting the molten resin into such a heated mold, placing the first-injected resin of fluid far from the gate and the following-injected resin fluid near to the gate and cooling down the filled resin and mold surface in parallel, prevents the creation of any weld line, flow mark, gate mark and sand surface even with low quality resin and deformations and curves caused by molecular structural stresses and creates a perfectly glossy surface of the plastic injection molded components.

The mold tool heated momentarily with the flames of gas fuel and a molding method using such a mold tool enlarge the flow length of a molten resin approximately 30 times more than that of the prior art. It allows placing numerous gates without restrictions of location and shape and producing perfect plastic surface injection mold components and produces, ultimately, huge sizes of injection molded plastic components and a very much thinner degree of thickness of injection molded plastic parts than that of the prior art. Additionally, the tiny holes and complicated shapes of grille ventilations are no longer difficult to be produced without any short shot and surface defects by the mold tool heated momentarily with the flames of gas fuel and a molding method using such a mold tool.

A mold tool heated momentarily with the flames of gas fuel and a molding method using such a mold tool do not require materials modified by additives aimed for enhancing the fluidity of the resin at all which cause lots of side effect problems as in additive migration and gas marks on the molded parts. A simple pure resin of high mechanical strength and high heat resistance, as in engineering plastics, could be processed into glossy injection molded components without a short shot problem in spite of very low fluidity with the mold tool heated momentarily with the flames of gas fuel and a molding method using such a mold tool.

A simple injection molding machine of approximately 30 times smaller clamping force than that of the prior art by the mold tool heated momentarily with the flames of gas fuel and a molding method using such a mold tool and placing multiple gates with 30 times longer flow lengths than that of the prior art.

According to the above explained effects of the mold tool heated momentarily with the flames of gas fuel and a molding method using such a mold tool, these reduce more than half of the production cost of plastic injection molded parts thoroughly by reducing half of the wall thickness of components and reducing defects and using small machines and an inexpensive pure resin and in a simple and free design idea. It does not increase production cycle time at all compared to the prior art.

No matter how big the products and how deep and how complicated the shape of the mold tools are, the mold tool heated momentarily with the flames of gas fuel and a molding method using such a mold tool are invented for the mold surface to be heated up to 300°C and consistently in a few seconds through using a needle hole gas fuel supply device or multi-gas supply unit adopting the heating technique of an injection molding process and making the gas fuel flame on the mold surface and making the gas fuel flame to contact the other mold surface and keeping the gas fuel flame inside the mold tools.

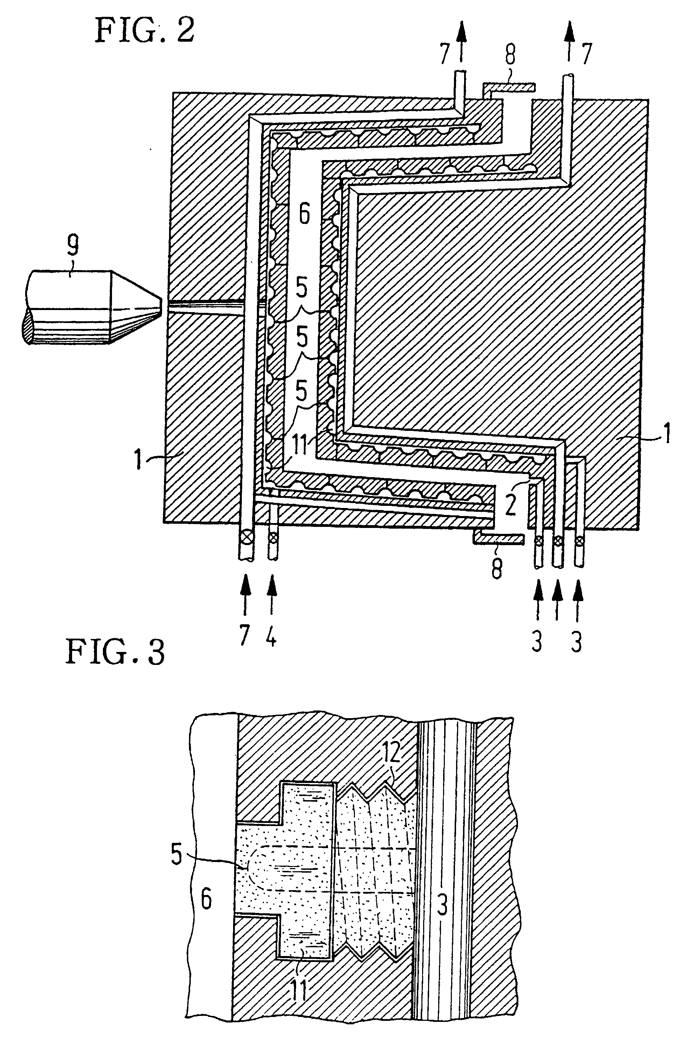

As shown in FIG.3, the needle hole gas fuel supply device consists of a fixing unit and a needle hole unit. The diameter of the needle hole is less than the non-flow thickness of the indicated polymer resin and the gas fuel and, oxygen or air passes the holes, but the molten resin does not pass it. Subject to mold design, diameter holes bigger than the non-flow thickness of a polymer resin can be used, for instance, in case of finding the holes in the free space exterior of the product cavity and interior of the product cavity the holes are formed with moving support and disappear from the product cavity when the mold tools are completely closed.

As shown in Fig. 2, in order to heat the mold surface as quickly as possible, the mold surface has to be directly exposed to the gas flame by using an interior gas fuel supply unit and the gas flame should be kept in the narrow space defined between the two mold surfaces by flaming the gas fuel in a narrow gap between two mold parts. Simultaneously, the molten resin is injected into the warm cavity without any waiting time after the gas flame is extinguished. The interval between the gas flame being extinguished and the molten resin being injected may be zero by the molding method using the present mold tool. The gap between two mold parts is the space the gas flame may reach between 0 and 100 mm according to the mold shape, size and other parameters.

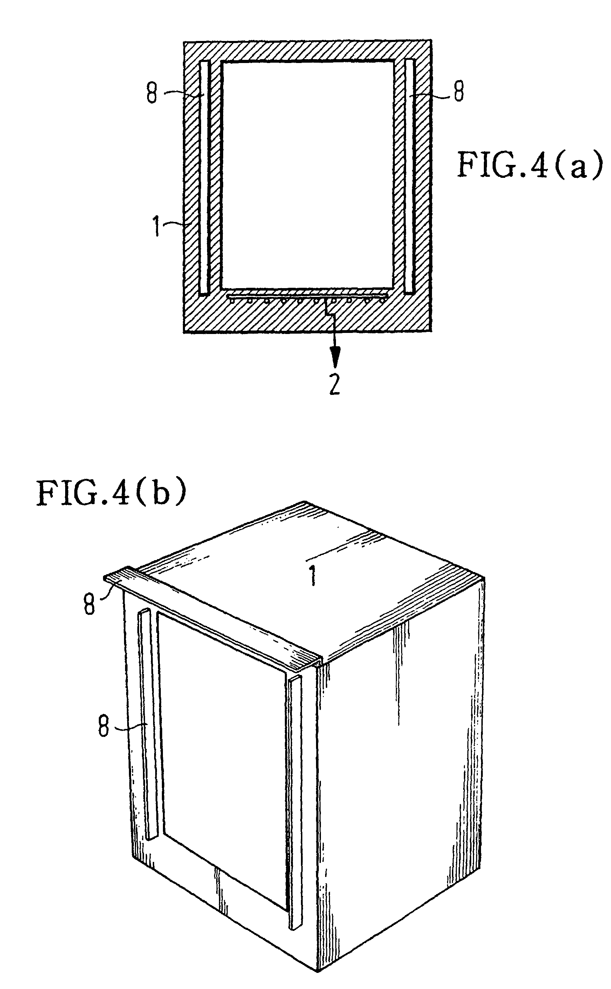

As shown in Fig. 4, the gas flame is kept inside the mold cavity and prevented from extending outside of the mold parts and all of the gas flame is used only for heating the mold surface. The gas flame kept between the two mold parts is called " a closed gas flame " as opposed to "an open flame " which is open to air outside of mold. In order to expose the mold surface to a closed gas flame and prevent pollution, air or oxygen is supplied into the mold cavity through the needle hole devices and other devices equipped in the mold tools. The flame guards surrounding the mold parts are attached at appropriate shape and size depending on the mold size and shape.

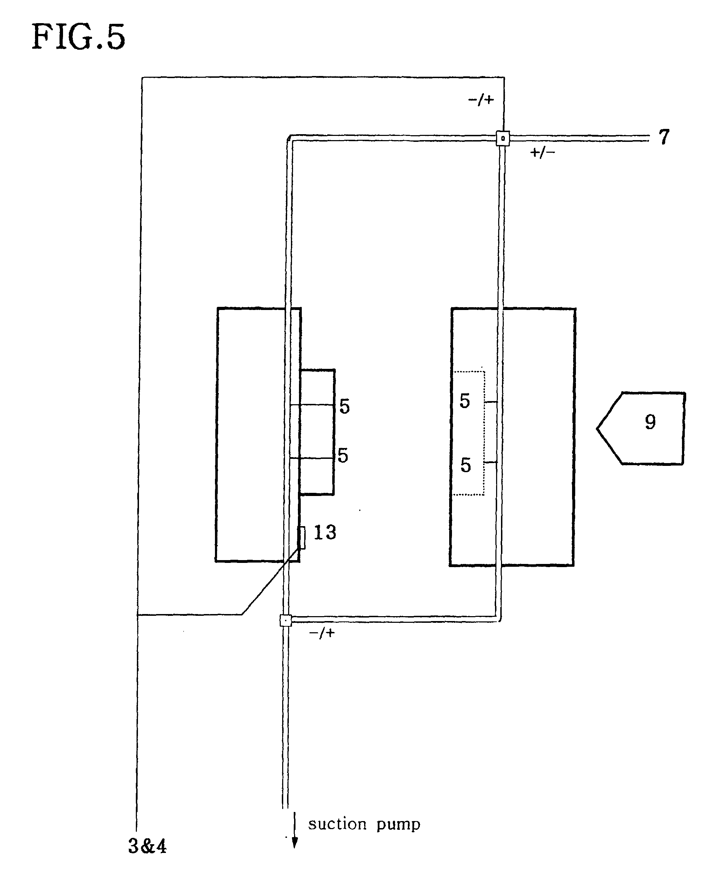

For the modification for the mold tool heated momentarily with the flames of gas fuel of a ready-made mold tool of which the thickness of a mold is not less than 15 mm, chilled water is hardly used for cooling the mold and it is recommended warming up the mold as high as possible in order not to increase the gas flame heating time. As shown in Fig. 7, the mold thickness of the mold tool heated momentarily with the flames of gas fuel should be as thin as possible in order to heat up the mold surface momentarily. In the case of using the chilled water, the channel of chilled water is commonly used with the gas fuel, and an oxygen or air supply channel as shown in Fig. 5. But chilled water has to be circulated by a suction pumping system, but not a pressing pumping system, in order to prevent water leakage through the needle hole being controlled by a flow change valve sequenced to machine operation as shown in Fig. 5. An igniting device on the bottom of the mold tool is installed and generates the gas flame between the two mold surfaces when the gas fuel is supplied into the mold cavity as shown Fig. 5.

Natural gases fuel, methane, ethane, propane, butane, pentane, acetylene, ammonia gas or low molecular alcohols may be used as gas fuel of the present forming process and the air, pure oxygen or dioxide hydrogen may be used for making a perfect combustion gas flame.

The processes cycle of the mold tool heated momentarily with the flames of gas fuel and a molding method are described as follows. In the process of closing two parts of the mold tool, closing the mold tool is stopped a while. Then, the gas fuel, and oxygen or air are supplied inside the space defined between two parts of mold tools through the gas fuel supply channel on the bottom of mold tool and needle hole supplying devices and, simultaneously, the gas flame is ignited, a closed gas flame is generated inside the space defined between the two parts of mold tools and the gas flame comes into contact with the surface of the cavity in the mold. A few seconds later, when the mold surface is heated up to a required temperature, the two parts of the mold are closed completely, the gas, and oxygen or air supplies are cut off and simultaneously the molten resin is injected into the product cavity. After filling the cavity completely with molten resin supply, the chilled waters wait for cooling until the resin is cold enough to be taken out. The two parts of the mold tools are opened and the plastic molded components are removed. The operation cycle is repeated getting the perfect injection molded plastic products by the mold tool heated momentarily with the flames of gas fuel and a molding method using such a mold tool.

Applying the mold tool heated momentarily with the flames of gas fuel and a molding method using such a mold tool to a compact disc driver is one of the industrial application. A simple mold tool modification is done for a compact disc driver by attaching the needle hole units on one side plate of the mold. Additionally, the mold surface is up to 200°C by the gas flame to facilitate the injecting of molten resin. It will improve the reflection of fine texture for the memory of a compact disc driver, increase the production quantity up to 50% of present production and save the cost.

### Industrial Applicability

Ready-made mold tools may be modified simply by inserting needle hole gas supply unit and/or multi-gas supply unit into the mold and applying gas flame to heat up the mold surface. It will improve the quality of plastic components and eliminate all problems of existing components.

A TV housing mold may be designed to have a needle hole gas supply unit and multiple gas supply units and to apply the gas flame to the mold to heat up the mold surface higher than a glass transition temperature of an applied resin. The TV cabinet housing component may be have no weld line nor flow mark, be used without painting and be designed with a 1.5 mm wall thickness. It will reduce the cost from 30% to 50% of the total cost of TV cabinet production.

## Claims

1. A mold tool in which mold surfaces are heated momentarily with the flames of gas fuel, comprising:
a set of mold bodies (1), having
a gas fuel supply channel (3) in a body (1) for supplying gas fuel into a space (6) defined between the set of mold bodies (1),
an oxygen supply channel (4) in the other body (1) for supplying oxygen into the space defined between the set of mold bodies; and
ignition means for igniting the supplied gas fuel and oxygen in the space defined between the set of mold bodies; and
a gas fuel supply conduit communicated with the gas fuel supply channel (3) and closable when supply ends, and an oxygen supply conduit communicated with the oxygen supply channel (4) and closable when oxygen supply ends; whereby
the gas fuel supply channel (3) is provided with a plurality of supply exits (5) having sizes respectively smaller than a size which allows molding material to flow between the gas fuel supply channel and internal surfaces of the set of mold bodies; and in that
the oxygen fuel supply channel (4) is provided with a plurality of supply exits (5) having sizes respectively smaller than a size which allows molding material to flow between the oxygen supply channel and internal surfaces of the set of mold bodies.

2. A molding method using a mold tool according to claim 1, comprising the steps of:
supplying gas fuel and oxygen into a space (6) defined between the set of mold bodies (1);
igniting the supplied gas fuel and oxygen;
heating internal surfaces of the set of mold bodies (1) momentarily with the flames of gas fuel to a desired temperature; and
feeding molding material into an internal cavity of the mold tool and forming the material in the mold tool.

## Patentansprüche

1. Formwerkzeug, bei dem Formwerkzeugflächen vorübergehend mit den Flammen von Brenngas erwärmt werden und das folgendes umfaßt:
einen Satz von Formwerkzeugkörpern (1) mit
einem Brenngaszuführkanal (3) in einem Körper (1) zur Zuführung von Brenngas in einen zwischen dem Satz von Formwerkzeugkörpern (1) definierten Raum (6),
einem Sauerstoffzuführkanal (4) in dem anderen Körper (1) zur Zuführung von Sauerstoff in den zwischen dem Satz von Formwerkzeugkörpern definierten Raum; und
einem Zündmittel zur Entzündung des dem zwischen dem Satz von Formwerkzeugkörpern definierten Raum zugeführten Brenngases und Sauerstoffs; und
eine Brenngaszuführleitung, die mit dem Brenngaszuführkanal (3) in Verbindung steht und nach Ende der Zuführung geschlossen werden kann, und
eine Sauerstoffzuführleitung, die mit dem Sauerstoffzuführkanal (4) in Verbindung steht und nach Ende der Sauerstoffzuführung geschlossen werden kann;
wobei der Brenngaszuführkanal (3) mit mehreren Zuführauslässen (5) versehen ist, deren Größe jeweils kleiner ist als eine Größe, die einen Fluß des Formmaterials zwischen dem Brenngaszuführkanal und inneren Flächen des Satzes von Formwerkzeugkörpern gestattet; und
der Sauerstoffzuführkanal (4) mit mehreren Zuführauslässen (5) versehen ist, deren Größe jeweils kleiner ist als eine Größe, die einen Fluß des Formmaterials zwischen dem Sauerstoffzuführkanal und inneren Flächen des Satzes von Formwerkzeugkörpern gestattet.

2. Formverfahren unter Verwendung eines Formwerkzeugs nach Anspruch 1, bei dem man:
Brenngas und Sauerstoff einem zwischen dem Satz von Formwerkzeugkörpern (1) definierten Raum (6) zuführt;
das zugeführte Brenngas und den zugeführten Sauerstoff entzündet;
die Innenflächen des Satzes von Formwerkzeugkörpern (1) vorübergehend mit den Flammen des Brenngases auf eine gewünschte Temperatur erwärmt; und
Formmaterial in einen Innenhohlraum des Formwerkzeugs speist und das Material in dem Formwerkzeug formt.

## Revendications

1. Outil de moulage dans lequel des surfaces de moule sont momentanément chauffées par les flammes d'un gaz combustible, comprenant :
un ensemble de corps (1) de moule, ayant
un canal (3) d'alimentation en gaz combustible dans un corps (1) pour envoyer un gaz combustible dans un espace (6) défini entre les corps (1) de l'ensemble de corps de moule,
un canal (4) d'alimentation en oxygène dans l'autre corps (1) pour envoyer de l'oxygène dans l'espace défini entre les corps de l'ensemble de corps de moule ; et
un moyen d'inflammation pour enflammer le gaz combustible et l'oxygène fournis dans l'espace défini entre les corps de l'ensemble de corps de moule ; et
un conduit d'alimentation en gaz combustible communiquant avec le canal (3) d'alimentation en gaz combustible et pouvant se fermer au terme de l'alimentation, et un conduit d'alimentation en oxygène communiquant avec le canal (4) d'alimentation en oxygène et pouvant se fermer au terme de l'alimentation en oxygène ; grâce à quoi
le canal (3) d'alimentation en gaz combustible est pourvu de plusieurs sorties d'alimentation (5) de dimensions respectivement plus petites que des dimensions permettant à la matière à mouler de s'écouler entre le canal d'alimentation en gaz combustible et des surfaces intérieures de l'ensemble de corps de moule ; et en ce que
le canal (4) d'alimentation en oxygène de combustion est pourvu de plusieurs sorties d'alimentation (5) de dimensions respectivement plus petites que des dimensions permettant à la matière à mouler de s'écouler entre le canal d'alimentation en oxygène et des surfaces intérieures de l'ensemble de corps de moule.

2. Procédé de moulage à l'aide d'un outil de moulage selon la revendication 1, comprenant les étapes consistant à :
envoyer un gaz combustible et de l'oxygène dans un espace (6) défini entre les corps (1) de l'ensemble de corps de moule ;
enflammer le gaz combustible et l'oxygène fournis ;
chauffer momentanément, à une température voulue, des surfaces intérieures de l'ensemble de corps (1) de moule avec les flammes du gaz combustible ; et
acheminer une matière à mouler jusque dans une cavité interne de l'outil de moulage et mettre la matière forme dans l'outil de moulage.
